# EUROPEAN PATENT APPLICATION

(11) **EP 3 178 586 A1**
(43) Date of publication of application: **14.06.2017**
(21) Application number: 16002510.2
(22) Date of filing: 24.11.2016
(51) Int. Cl.: B22F 1/00, B22F 3/105, C23C 8/20, C23C 8/24, C23C 8/36

(54) **METHOD AND APPARATUS FOR PRODUCING POWDER AND METHOD FOR MANUFACTURING SHAPED OBJECT**

(30) Priority: 10.12.2015 JP 2015241004; 10.12.2015 JP 2015241006
(71) Applicant: Canon Kabushiki Kaisha, Ohta-ku Tokyo (JP)
(72) Inventor: KAMACHI, Koh, Tokyo (JP); KITANI, Koji, Tokyo (JP)
(74) Representative: WESER & Kollegen

(57) **Abstract**

A method for producing a powder includes forming a layer (104) of a raw material powder, and performing one of an operation of nitriding the raw material powder of the layer in an atmosphere containing nitrogen or an operation of carbonizing the raw material powder of the layer in an atmosphere containing carbon.

## Description

### BACKGROUND OF THE INVENTION

### Field of the Invention

The present disclosure relates to a method and an apparatus for producing a powder by nitriding or carbonizing a raw material powder.

### Description of the Related Art

A technique for manufacturing shaped objects by powder bed fusion is being developed. In the powder bed fusion method, a portion of a thin layer formed of a raw material powder is solidified by being irradiated with an energy beam, and such layers are deposited to form a shape object. Japanese Patent Laid-Open No. 2005-67998 discloses a method for increasing the hardness of a shaped object produced by powder bed fusion. In this method, a photocurable resin in which a ceramic powder is dispersed is formed into a three-dimensional shape, and the shape is sintered in a high-temperature atmosphere. Unfortunately, this method uses a resin binder that will be removed by burning in the process. Therefore, the density of the resulting shaped object is reduced to about 85% and, accordingly, the shaped object cannot have a desired hardness.

Japanese Patent Laid-Open No. 2011-506761 discloses a technique for producing a three-dimensional object in which metal powder is nitrided to increase the hardness. In this technique, a thin layer of a raw material powder is solidified in a depressurized chamber by powder bed fusion using an electron beam while nitrogen gas is fed to the chamber.

In the powder bed fusion of Japanese Patent Laid-Open No. 2011-506761, the layer is momentarily nitrided at the time when being irradiated with the electron beam. Accordingly, the nitrogen content in the resulting shaped object cannot be sufficiently increased. Thus, this technique cannot produce a shaped object as hard as nitrided ceramics.

### SUMMARY OF THE INVENTION

The present invention in its first aspect provides a method for producing a powder as specified in Claims 1 to 8 and Claims 15 to 17 (partially).

The present invention in its second aspect provides a method for manufacturing a shaped object as specified in Claims 9 to 14 and Claims 15 to 17 (partially).

The present invention in its third aspect provides a powder producing apparatus as specified in Claims 18 to 24.

The present invention in its fourth aspect provides a shaped object manufacturing apparatus as specified in Claim 25.

The present invention in its fifth aspect provides a shaped object as specified in Claims 26 and 27.

Further features of the present disclosure will become apparent from the following description of exemplary embodiments with reference to the attached drawings.

### BRIEF DESCRIPTION OF THE DRAWINGS

Fig. 1 is an illustrative representation of a shaped object manufacturing apparatus according to one or more embodiments of the subject disclosure.
Fig. 2 is an illustrative representation of a shaping container, according to one or more embodiments of the subject disclosure.
Fig. 3 is a flow chart of a process for manufacturing a shaped object, according to one or more embodiments of the subject disclosure.
Figs. 4A to 4F are illustrative representations of deposition in a shaped object manufacturing apparatus, according to one or more embodiments of the subject disclosure.
Fig. 5 is a flow chart of plasma nitridation/plasma carbonization, according to one or more embodiments of the subject disclosure.
Fig. 6 is a flow chart of laser beam heating formation, according to one or more embodiments of the subject disclosure.
Fig. 7 is an illustrative representation of a shaped object manufacturing apparatus according to one or more embodiments of the subject disclosure.

### DESCRIPTION OF THE EMBODIMENTS

Exemplary embodiments of the disclosure will now be described with reference to the attached drawings.

### First Embodiment

In a first embodiment, a layer of a raw material powder is nitrided with plasma, and the thin layer of the nitrided powder is immediately melted by heating with a laser beam and then solidified. A stack of such layers defines a shaped object 301.

### Shaped object Manufacturing Apparatus

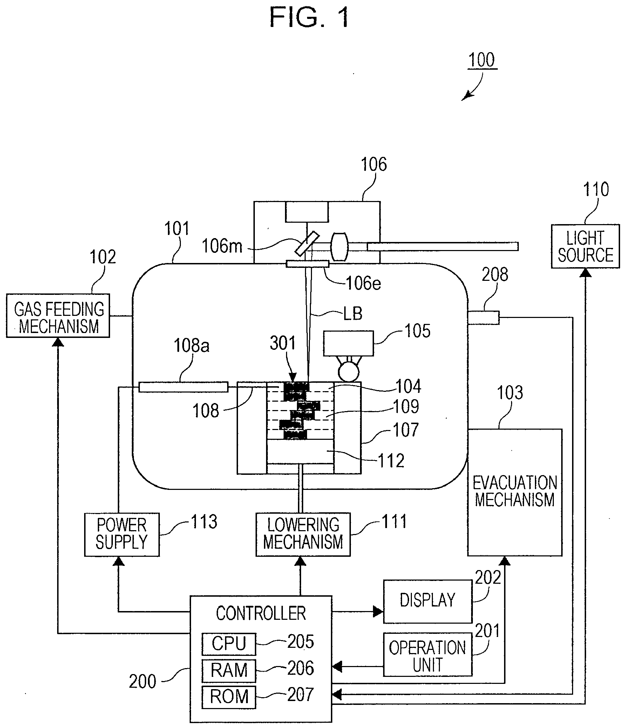

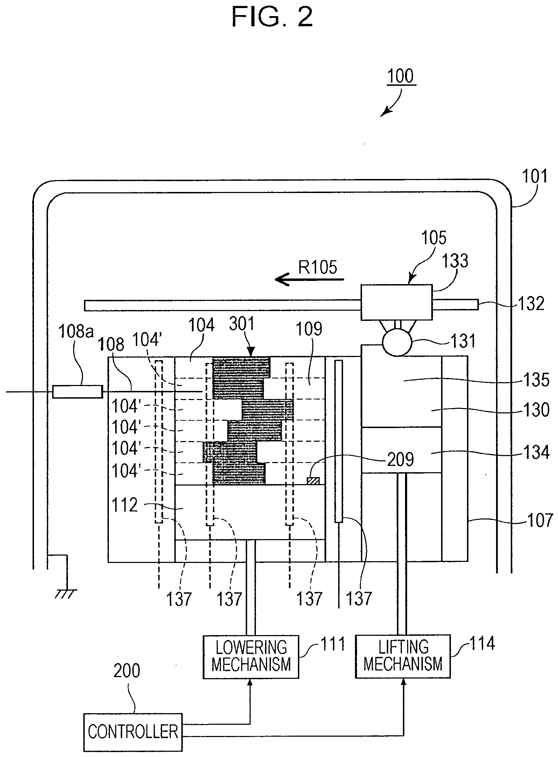

Fig. 1 is an illustrative representation of the shaped object manufacturing apparatus used in the first embodiment. Fig. 2 is an illustrative representation of a shaping container. As shown in Fig. 1, the shaped object manufacturing apparatus 100 is what is called a 3D printer of a powder bed fusion type. A chamber 101 is made of stainless steel and can be sealed. A vacuum gauge 208 is connected to the chamber 101. The vacuum gauge 208, which is a type of measuring device, measures the pressure in the chamber 101.

An evacuation mechanism 103, which is a type of depressurizing device, can reduce the pressure in the chamber 101. The evacuation mechanism 103 evacuates the chamber 101 to reduce mainly oxygen. The evacuation mechanism 103 includes a dry pump and a turbo-molecular pump connected to the dry pump in series and can evacuate the chamber 101 up to a vacuum of, for example, 1 × 10⁻⁴ Pa.

The evacuation mechanism 103 is provided with an opening adjustment valve capable of adjusting the opening size at the joint with the chamber 101. A controller 200 can control the interior of the chamber 101 to a desired atmosphere and vacuum level by controlling the opening adjustment valve according to the output of the vacuum gauge 208 while feeding a gas to the chamber 101 from a gas feeding mechanism 102.

The gas feeding mechanism 102, which is a type of feeder, feeds a nitrogen-hydrogen mixed gas containing nitrogen and hydrogen into the chamber 101. The gas feeding mechanism 102 can feed nitrogen gas and hydrogen gas with a desired proportion into the chamber 101. Two gas feeding mechanisms may feed nitrogen gas and hydrogen gas separately.

Turning to Fig. 2, the shaping container 107, which is a type of powder container, includes a shaping section 109, and a deposition substrate 112 is vertically movably disposed within the shaping section 109. A lowering mechanism 111 can lower the deposition substrate 112 step by step at a pitch according to the thickness of the powder layers. In the shaping section 109, nitrided layers 104', each converted from a layer 104 by nitridation build a stack.

A resistor heater 137, which is a type of heater, is embedded in the wall of the shaping section 109 so that the layer 104 can be heated. Furthermore, the deposition substrate 112 is provided with a temperature sensor 209 on the surface thereof. The controller 200 controls the on/off of the current for energizing the resistor heater 137 according to the output of the temperature sensor 209, thus heating the layer 104 so as to keep the layer at a constant temperature.

A layer-forming mechanism 105, which is a type of forming device, forms the layer 104 of the raw material powder in the shaping container 107 disposed in the chamber 101. Since the thickness of the raw material powder layer formed by the layer-forming mechanism 105 is as small as 5 µm to 200 µm, the layer 104 is called thin layer in the present disclosure.

The thin layer-forming mechanism 105 includes a moving portion 133 that moves with guide by a guide 132 in the direction indicated by arrow R105 along the top plane of the shaping container 107, thus forming the thin layers 104 in the shaping section 109. The raw material powder 135 is stored in a raw material section 130 and is lifted to a position higher than the top plane of the shaping container 107 by actuating the lifting mechanism 114 so as to raise the bottom plate 134. The thin layer-forming mechanism 105 forms a highly dense thin layer 104 of the raw material powder 135 to a uniform thickness at the top plane of the shaping section 109 by leveling off the raw material powder at the top plane of the shaping container 107 while rotating the metal roller 131 in the counter direction to the top plane of the shaping container 107. The thin layer-forming mechanism 105 further forms another thin layer 104 of the raw material powder on the nitrided thin layer 104' converted from the thin layer 104 previously formed in the shaping section 109. The stack of the nitrided thin layers 104' and the thin layer 104 thus formed in the shaping section 109 is electrically separated from the chamber 101.

### Shaping Container

As shown in Fig. 1, the shaping container 107 is electrically isolated from the chamber 101. The shaping container 107 and the deposition substrate 112 are made of an insulating material so as to avoid generating plasma at the surfaces thereof. Hence, the surface of the shaping container 107 that will come in contact with the thin layer 104 is made of an insulating material. A voltage is applied to the thin layer 104 of the raw material powder from a power supply 113 through an electrode 108 (power supply device). The electrode 108 is covered with a cover 108a made of an insulating material to avoid generating plasma at the surface thereof.

In the first embodiment, an alternating voltage is applied to the thin layer 104 of the raw material powder by using the insulating shaping container 107 and the electrode 108. This structure is efficient for plasma nitridation of the thin layer 104. In general, the raw material powder is less conductive even though it is a metal powder because the surface of the powder is covered with a passivation film. Therefore, it has been conventionally believed that a member such as a coil or a flat electrode must be disposed close to the raw material powder for plasma generation. In the shaped object manufacturing apparatus 100, however, it is difficult to dispose the member such as a flat electrode right above the thin layer 104 because a light path must be secured for laser beam irradiation. In addition, if the member such as a flat electrode is disposed right above the thin layer 104 so as to avoid interference with the thin layer-forming mechanism 105 moving in a horizontal direction, the member must be physically retracted every time a thin layer 104 is formed. Since the formation of a thin layer is repeated several hundred to several thousand times for producing one shaped object 301, it is inefficient to physically retract the member. In the first embodiment, accordingly, an alternating voltage is applied to the electrode 108 in contact with the thin layer 104 in a state where the shaping container 107 holding the thin layer 104 is electrically isolated from the chamber 101. This configuration enables plasma containing nitrogen to be generated uniformly over the entire surface of the thin layer 104 without using a flat electrode or the like, so that the raw material powder can be uniformly and rapidly nitrided.

### Plasma Nitridation

The shaped object manufacturing apparatus 100 generates plasma in a space adjacent to the thin layer 104 of the raw material powder formed in the shaping container 107 by applying an alternating voltage to the thin layer 104, as shown in Figs. 1 and 2. The shaped object manufacturing apparatus 100 holds the thin layer 104 formed as the first layer on the deposition substrate 112 or the thin layer 104 formed as the second or subsequent thin layer 104 on a nitrided thin layer 104' in the plasma containing nitrogen ion and thus nitrides the thin layer.

The power supply 113, which is a type of power supply device, applies an alternating voltage to the thin layer 104. The electrode 108 comes in contact with the thin layer 104 or a nitrided thin layer 104' in the shaping container 107. The power supply 113 applies the alternating voltage to the thin layer 104 of the raw material powder through the electrode 108. The power supply 113 may output an alternating voltage superimposed with a direct current voltage. The direct current can be set stepwise from -500 V to +500 V. The amplitude and the frequency of the alternating voltage can be set stepwise from 0 V to 2000 V and from 10 kHz to 500 kHz, respectively.

The controller 200 actuates the power supply 113 while feeding nitrogen gas to the chamber 101 to keep the vacuum level in the range of 1 Pa to less than 20 kPa. Thus, plasma is locally generated in a space adjacent to the thin layer 104, and the raw material powder of the thin layer 104 is efficiently exposed to the plasma. At this time, the controller 200 energizes the resistor heater 137 to heat the thin layer 104 of the raw material powder on the deposition substrate 112, as shown in Fig. 2. The nitridation efficiency is thus increased. Alternatively, the thin layer 104 may be heated by using a laser beam (described later) having a reduced power, instead of the resistor heater 137 or simultaneously with the use of the resistor heater 137. The thin layer 104 may be heated by using the laser beam whose spot area is increased.

### Laser Beam Heating Formation

A scanning heater mechanism 106, which is a type of beam irradiator, irradiates a nitrided thin layer 104' converted from a thin layer 104 with a laser beam, which is a type of energy beam, as shown in Fig. 1. The scanning heater mechanism 106 heats a portion of the nitrided thin layer 104' to be solidified according to input data with a spot of a laser beam emitted from the light source 110 by scanning the laser beam with a Galvano mirror 106m. The light source 110 is a YAG laser oscillator having a power of 500 W.

The scanning heater mechanism 106 heats the nitrided thin layer 104' at the top of the shaping section 109 in the shaping container 107 with the laser beam, thereby substantially instantly melt the nitrided layer 104' and solidify this layer to integrate with the underlying solid texture. Thus, a desired portion of the nitrided thin layer 104' at the top of the shaping section 109 is melted and solidified. At this time, it is desirable to keep the nitrided thin layer 104' at a high temperature during the laser beam heating formation by continuing the above-described plasma nitridation, that is, by energizing the resistor heater 137. By keeping the nitrided thin layer 104' at a high temperature, the efficiency of the laser beam heating formation is increased. Consequently, high-speed formation can be made even with a low-power laser beam. Thus, the variation of the melted state of the nitrided thin layers 104' can be reduced and, consequently, the resulting shaped object 301 can have a uniform texture.

The heat for this laser beam heating formation promotes further nitridation of the nitrided powder in the nitrided thin layers 104'. It is therefore not necessary that the raw material powder is completely nitrided by the plasma nitridation. In other words, nitridation may be completed by finally melting the powder by laser beam heating formation performed at the stage where the raw material powder has been roughly nitrided by plasma nitridation. Thus, the time for nitridation can be reduced, and, accordingly, the time for manufacturing the shaped object 301 can be reduced.

### Process for Manufacturing Shaped Object

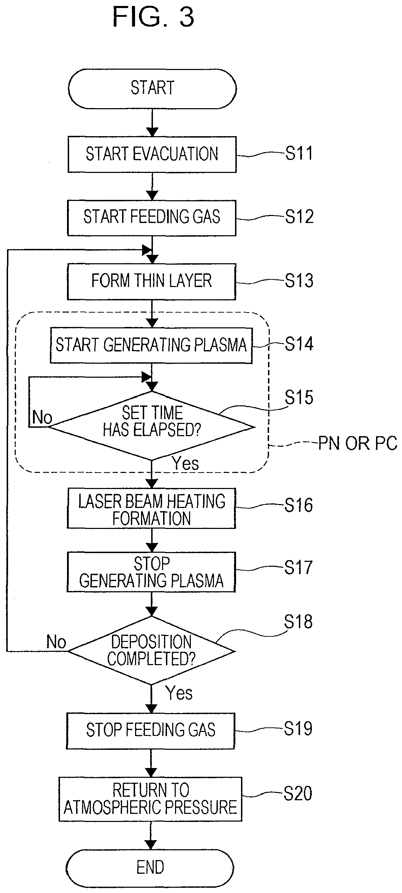

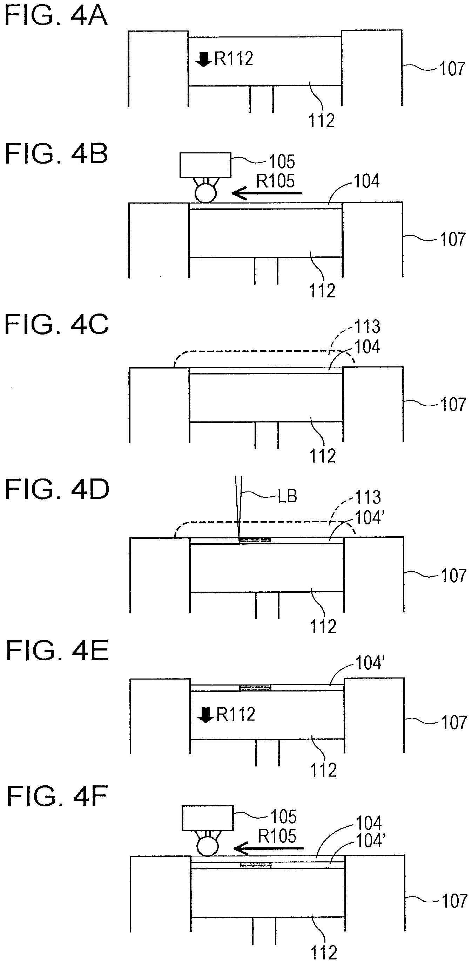

Fig. 3 is a flow chart of a process for manufacturing the shaped object, and Figs. 4A to 4F are illustrative representations of building a stack in the shaped object manufacturing apparatus. As shown in Fig. 1, the controller 200 includes a CPU 205, a RAM 206, and a ROM 207. A process control program called from the ROM 207 is stored in the RAM 206, and thus the CPU 205 functions as a process controller. The user commands the start of a process by using an operation unit 201.

When the start of the process has been commanded, the controller 200 actuates the evacuation mechanism 103 to evacuate the chamber 101 (S11), as shown in Fig. 3. When the pressure in the chamber 101 has reached 1 × 10⁻² Pa, the gas feeding mechanism 102 starts to feed a gas to control the chamber 101 to a process pressure of less than atmospheric pressure (S12). In the step of creating an atmosphere through these steps S11 and S12, the chamber 101 is evacuated to a first pressure, and then a substance containing nitrogen is fed to the chamber 101, as shown in Fig. 1. Thus, an atmosphere having a second pressure higher than the first pressure and lower than atmospheric pressure is created in the chamber 101.

When the interior of the chamber 101 has reached the second pressure (for example, 10 kPa), the controller 200 actuates the thin layer-forming mechanism 105 to form a thin layer 104 of the raw material powder (S13), as shown in Fig. 3. In the step of lowering shown in Fig. 4A, the lowering mechanism 111 is actuated to lower the deposition substrate 112, thereby forming a space for forming a thin layer 104 therein in the shaping container 107. In the step of forming or step S13, the thin layer-forming mechanism 105 is actuated to form a thin layer 104 of the raw material powder on the deposition substrate 112, as shown in Fig. 4B.

The controller 200 actuates the power supply 113 to start plasma generation (S14), as shown in Fig. 3, and the thin layer 104 is subjected to plasma nitridation PN until a set time has elapsed (during No in S15). In the step of nitridation including steps S14 and S15, the gas feeding mechanism 102 and the power supply 113 are actuated to plasma-nitride the thin layer 104 of the raw material powder on the deposition substrate 112, as shown in Fig. 4C. In the nitridation step, an alternating voltage is applied to the thin layer 104 from the power supply 113 to generate plasma in an atmosphere containing nitrogen, hydrogen, and reduced oxygen, thereby nitriding the raw material powder of the thin layer 104. The nitridation step is performed in the atmosphere created in the chamber 101 under a pressure lower than atmospheric pressure (preferably in the range of 1 Pa to less than 20 kPa). The nitridation step follows the step of forming the thin layer 104 in the shaping container 107 disposed in and electrically isolated from the chamber 101. Also, the nitridation step is performed on the thin layer 104 kept at a constant temperature by being heated with a resistor heater 137.

After the completion of the plasma nitridation PN of the thin layer 104 (when Yes in S15), the controller 200 actuates the scanning heater mechanism 106 and the light source 110 to perform laser beam heating formation on the nitrided thin layer 104' (S16), as shown in Fig. 3. In the step of beam formation including Step S16, the scanning heater mechanism 106 and the light source 110 are actuated to melt and solidify the nitrided thin layer 104' on the deposition substrate 112, as shown in Fig. 4D. In the beam formation step, the portion of the nitrided thin layer 104' to be solidified is irradiated with an energy beam, thereby being solidified. This beam formation step is performed while plasma is being generated by applying an alternating voltage to the nitrided thin layer 104' in an atmosphere containing nitrogen, hydrogen, and reduced oxygen.

After the completion of the laser beam heating formation (S16) of the single nitrided thin layer 104', the controller 200 stops the power supply 113 to stop generating plasm at the nitrided thin layer 104' (S17), as shown in Fig. 3. The controller 200 repeats the thin layer formation (S13), the plasma nitridation (S14 and S15), the laser beam heating formation (S16), and the plasma generation stop (S17) until the number of layers (the number of times of deposition) has reached a required number for obtaining the shaped object 301 (during No in S18). In the second or subsequent lowering step, the lowering mechanism 111 is actuated to lower the deposition substrate 112, thereby forming a space for forming another thin layer 104 of the raw material powder over the partially solidified nitrided thin layer 104', as shown in Fig. 4E. In the second forming step, the thin layer-forming mechanism 105 is actuated to form another thin layer 104 of the raw material powder, as shown in Fig. 4F, on the nitrided thin layer 104' converted in the nitridation step from the thin layer 104 formed on the deposition substrate 112 in the shaping container 107 in the forming step.

As shown in Fig. 3, when the number of layers, or number of times of deposition, has reached the required number for obtaining the shaped object 301 (when yes in S18), the controller 200 stops feeding the gas (S19) and feeds ambient air into the chamber 101 (S20). Then, the controller permits removing the shaped object. This permission is shown on a display 202.

As it has been described above, the shaped object manufacturing apparatus 100 repeats the thin layer formation, the plasma nitridation, and the laser beam heating formation, thus producing a three-dimensional shaped object 301 defined by a stack of the nitrided thin layers 104'.

### Materials of Shaped Object

Samples of the shaped object 301 were formed in Examples 1 to 3 using different materials and different plasma nitridation conditions in the above-described shaped object manufacturing apparatus 100, and the physical properties and other properties of the samples were examined.

### EXAMPLE 1

In Example 1, stainless steel particles were subjected to plasma nitridation and laser beam sintering under the following conditions.

### Conditions for Plasma Nitridation

### Pressure in Chamber 101: 13.3 kPa

Gas to be fed: Mixture of nitrogen gas and hydrogen gas in a ratio of 1:1
Raw material powder: stainless steel (SUS 613) particles having a particle size of 7 µm produced by water atomization
Thickness of thin layers 104: 20 µm
Voltage: alternating voltage of 1 kV with a frequency of 100 kHz
Plasma nitridation time: 3 minutes

### Conditions for Laser Beam Heating Formation

Portion to be melted: a square portion of 25 mm by 25 mm of the thin layer 104
Number of layers: 2000
Height of shaped object 301: 40 mm

The resulting shaped object 301 of Example 1 was analyzed for the nitrogen content by XPS (X-ray photoemission spectroscopy), and the result was 12% (in terms of number of atoms). Also, the density of the shaped object 301 measured by the Archimedean method was 99.9%. The hardness HV of the shaped object 301 measured with a Vickers hardness meter was 2200. Thus, it was confirmed that the sample of Example 1 had a very high hardness HV while ordinary SUS 613 has a hardness HV of 200 to 400.

### EXAMPLE 2

In Example 2, titanium particles were subjected to plasma nitridation and laser beam heating formation under the following conditions.

### Conditions for Plasma Nitridation

Pressure in Chamber 101: 13.3 kPa
Gas to be fed: Mixture of nitrogen gas and hydrogen gas in a ratio of 1:1
Raw material powder: titanium (Ti) particles having a particle size of 20 µm produced by water atomization Thickness of thin layers 104: 40 µm
Voltage: alternating voltage of 20 kV with a frequency of 100 kHz
Plasma nitridation time: 10 minutes

### Conditions for Laser Beam Heating Formation

Portion to be melted: a square portion of 25 mm by 25 mm of the thin layer 104
Number of layers: 100
Height of stack: 4 mm

Since the particle size of the raw material powder used in Example 2 is larger, the plasma nitridation through the surface of the layer is likely to take a longer time than that in Example 1. Accordingly, the thin layer 104 and the stack of the nitrided thin layers 104' were kept at 500°C throughout the operation for plasma nitridation and laser beam heating formation by heating with the resistor heater 137. By keeping the thin layer 104 and the stack of the nitrided thin layers 104' at a high temperature, the speed of the reaction with nitrogen can be increased, and accordingly, the speed of plasma nitridation can be increased. In addition, in Example 2, plasma generation was continued by applying the alternating voltage to the nitrided thin layer 104' throughout the laser beam heating formation. This operation enables the stack of nitrided thin layers 104' as well as the thin layer 104 to be continuously doped with nitrogen ions.

The resulting shaped object 301 of Example 2 was analyzed for the nitrogen content by XPS (X-ray photoemission spectroscopy), and the result was 42% (in terms of number of atoms). Also, the density of the three-dimensionally shaped object 301 measured by the Archimedean method was 99.5%. The hardness HV of the shaped object 301 measured with a Vickers hardness meter was 2700. It was thus confirmed that the shaped object 301 is as hard as shaped objects formed of TiN that is a ceramic material produced by ordinary powder sintering.

### EXAMPLE 3

In Example 3, a mixture of tungsten carbide powder and cobalt powder was subjected to plasma nitridation and laser beam heating formation under the following conditions.

### Conditions for Plasma Nitridation

Pressure in Chamber 101: 13.3 kPa
Gas to be fed: Mixture of nitrogen gas and hydrogen gas in a ratio of 1:5
Raw material powder: mixture prepared by adding 5% of cobalt powder having a particle size of 20 µm produced by water atomization to tungsten carbide having a particle size of 5 µm produced by gas atomization
Thickness of thin layers 104: 40 µm
Voltage: alternating voltage of 20kV with a frequency of 100 kHz
Plasma nitridation time: 10 minutes

### Conditions for Laser Beam Heating Formation

Portion to be melted: a square portion of 25 mm by 25 mm of the thin layer 104
Number of layers: 100
Height of stack: 4 mm

Since the raw material powder used in Example 3 has a higher melting point, the plasma nitridation through the surface of the layer is likely to take a longer time than that in Example 1. Accordingly, the thin layer 104 and the stack of the nitrided thin layers 104' were kept at 600°C throughout the operation for plasma nitridation and laser beam heating formation by heating with the resistor heater 137. This auxiliary heating for keeping the thin layer 104 and the stack of the nitrided thin layers 104' at a high temperature can increase the speed of the reaction with nitrogen and, accordingly, the speed of plasma nitridation can be increased. In addition, in Example 3, plasma generation was continued by applying the alternating voltage to the nitrided thin layer 104' throughout the laser beam heating formation. This operation enables the stack of nitrided thin layers 104' as well as the thin layer 104 to be continuously doped with nitrogen ions.

The resulting shaped object 301 of Example 3 was analyzed for the nitrogen content by XPS (X-ray photoemission spectroscopy), and the result was 11% (in terms of number of atoms). Also, the density of the shaped object 301 measured by the Archimedean method was 99.2%. The hardness HV of the shaped object 301 measured with a Vickers hardness meter was 3500. It was thus confirmed that the shaped object 301 is as hard as or harder than shaped objects of tungsten carbide using cobalt as a binder formed by ordinary powder sintering.

### Advantage of First Embodiment

In the first embodiment, each thin layer 104 of a raw material powder is directly plasma-nitrided as it is. Therefore, the nitrogen content in the nitrided thin layers 104' can be increased to a desired level by expanding the time for plasma generation. By controlling the time for plasma generation, the nitrogen content in the nitrided thin layers 104' can be accurately controlled.

In the first embodiment, an alternating voltage is applied to the thin layer 104 formed in the forming step to generate plasma in an atmosphere containing nitrogen and reduced oxygen, thereby nitriding the raw material powder of the thin layer 104. Thus, the raw material powder is prevented from being oxidized to form a passivation film, and consequently the penetration speed of nitrogen can be increased.

In the first embodiment, an alternating voltage is applied to the thin layer 104 formed in the forming step to generate plasma in an atmosphere containing nitrogen, hydrogen, and reduced oxygen, thereby nitriding the raw material powder of the thin layer 104. The hydrogen reduces the oxide film of the raw material powder to eliminate the passivation film. Consequently, the penetration speed of nitrogen can be increased.

In the first embodiment, the shaped object is produced in the atmosphere having a pressure lower than atmospheric pressure, created in the chamber 101. Therefore, the plasma is kept more stable than the case of generating plasma in an atmosphere having a pressure higher than or equal to atmospheric pressure.

In the first embodiment, the shaped object is produced in an atmosphere having a pressure in the range of 1 Pa to less than 20 kPa, created in the chamber 101. Thus, the raw material powder can contain nitrogen with a higher content compared with the case of generating plasma at a lower vacuum level than in the first embodiment.

In the first embodiment, the chamber 101 is evacuated to a first pressure, and then a substance containing nitrogen is fed to the chamber 101, thereby creating an atmosphere having a second pressure higher than the first pressure and lower than atmospheric pressure. Thus, oxygen is much reduced from the atmosphere in which plasma will be generated. Consequently, the atmosphere is prevented from being contaminated with oxygen or moisture deriving from the raw material powder.

In the first embodiment, the thin layer 104 is formed in the shaping container 107 electrically isolated from the chamber 101, and plasma is generated therein. Thus, current leakage caused when an alternating voltage is applied to the raw material powder is reduced, and accordingly, the thin layer 104 can be efficiently nitrided by concentrating plasm at the surface of the thin layer.

In the first embodiment, the thin layer 104 is nitrided in a state where the thin layer 104 is kept at a constant temperature by being heated with a heater. This heating increases the nitridation speed of the raw material powder and, in addition, keeps the nitrided raw material powder of the layers from the first layer to the last layer in the same state.

In the first embodiment, the raw material powder is metal particles produced by water atomization. Accordingly, the material cost is reduced compared with that in the case of using metal particles produced by gas atomization. In general, metal particles produced by water atomization are coated with a thick passivation film. In the first embodiment, nitrogen is efficiently introduced while the passivation film is eliminated.

In the first embodiment, another thin layer 104 is formed on a nitrided thin layer 104' converted from a thin layer 104 previously formed on the deposition substrate 112 in the shaping container 107. Thus, a large amount of raw material powder can be nitrided even if the chamber 101 has a small bottom area or the shaping container 107 has a small flat area.

In the first embodiment, the portion of the nitrided thin layer 104' to be solidified is irradiated with a laser beam LB, thereby being solidified. The laser beam does not attenuate or scatter even at a low vacuum level. Unlike an electron beam, the laser beam can efficiently heat the nitrided thin layer 104' even at a low vacuum of 1 Pa to less than 20 kPa without scattering. Also, the nitrided thin layer 104' can immediately be subjected to laser beam heating formation without being exposed to ambient air.

In the first embodiment, the atmosphere in the range of 1 Pa to less than 20 kPa is kept during irradiation with the laser beam LB. Thus, the free path length of gas molecules in the chamber 101 is reduced, and, consequently, the constituents of the raw material powder are prevented from being deposited on the irradiation window 106e (shown in Fig. 1) for the laser beam LB.

In the first embodiment, plasma is generated also during irradiation with the laser beam LB by applying an alternating voltage to the nitrided thin layer 104' in the atmosphere containing nitrogen, hydrogen, and reduced oxygen. Thus, nitrogen in the nitrided thin layer 104' that will be lost by heating with the laser beam LB is supplemented.

In the first embodiment, an alternating voltage is applied to the thin layer 104 in the insulating shaping container 107. Thus, plasma is concentrated at the surface of the thin layer 104 without generating plasma in the shaping container 107.

In the first embodiment, the alternating voltage is applied through the electrode 108 that is in contact with the thin layer 104 or a nitrided thin layer 104' in the shaping container 107. At this time, since the thin layer 104 acts as a discharge electrode, another electrode or member such as a flat electrode is not necessary.

In the first embodiment, plasma can be generated only at the thin layer 104 by applying an alternating voltage only to the thin layer 104. Thus, the entire surface of the thin layer 104 is efficiently doped with nitrogen ions from the plasma. High-speed, high-concentration plasma nitridation is thus performed. Nitrogen Content in Shaped Object

In the first embodiment, the shaped object 301 is produced by growing crystals continuously from the crystal nucleuses in the underlying layer, in the same manner as in what is called the zone melting method. Hence, the shaped object 301 has a crystalline texture in which the crystals have grown in parallel in the direction from the first layer to the last layer, each produced by melting the nitrided thin layer 104' converted from a thin layer 104 of the raw material powder with the laser beam LB and then solidifying the nitrided layer. The shaped object 301 contains 10% or more of nitrogen in terms of number of atoms and is uniformly nitrided not only at the surface thereof, but also throughout the inside.

In the first embodiment, the nitrogen content in the shaped object 301 is 10% or more (in terms of number of atoms). There has been no technique for adding such a high content of nitrogen to a raw material of metal powder. One of the reasons of such a high nitrogen content is that plasma nitridation enables the raw material powder to be efficiently doped with nitrogen ions. Another reason is that elemental nitrogen can be secured sufficiently for nitridation reaction since the vacuum level in the chamber 101 is not much high. If a stack of thin layers for the shaped object 301 is nitrided, only the surface of the stack is nitrided without uniformly nitriding the inside of the stack. Even though each of the thin layers is subjected to nitridation, if the thin layers are not fully nitrided, only the surfaces of the thin layers, but not the inside of the layers, are nitrided, and the nitrogen content in the resulting shaped object 301 becomes uneven in the direction in which the layers are deposited. In the first embodiment, by nitriding each thin layer 104 in a plasma atmosphere, not only the surface of the thin layer, but also the inside, can be nitrided. Thus, the nitrogen content is increased uniformly throughout the shaped object 301 including the inside.

### Density of Shaped Object

As described above, there is an after-deposition sintering process, as one of the powder bed deposition techniques, for manufacturing a three-dimensional shaped object that is as hard as ceramics. In this process, a shaped object of a raw material powder containing a resin as a binder is formed, and then the raw material powder is sintered while the binder is heated and burned. Unfortunately, in the after-deposition sintering technique, many pores are formed in the resulting texture because the powder particles are bound by sintering, and the density of the resulting three-dimensional shaped object is not more than about 85%.

On the other hand, in the powder bed fusion method, which is performed in an atmosphere of air containing oxygen, since the thin layers of a metal raw material powder, such as an iron alloy powder or a titanium alloy powder, are each formed through the laser beam heating formation, the resulting three-dimensional shaped object has a density of 99% or more and thus can be a dense component.

In particular, the Examples of the first embodiment can produce dense components having a texture hardly containing pores with a density of 99.5% or more. The first embodiment can produce a three-dimensional shaped object 301 having a density of 99% or more that is as high as three-dimensional shaped objects produced by a known metal powder bed fusion method, and having as high a hardness as nitrided ceramic components produced by powder sintering.

### Second Embodiment

In a second embodiment, a raw material powder plasma-nitrided in a nitrided powder producing apparatus is shaped into a shaped object 301 in a shaped object manufacturing apparatus different from the nitrided powder producing apparatus by laser beam heating formation. Nitrided Powder Producing Apparatus

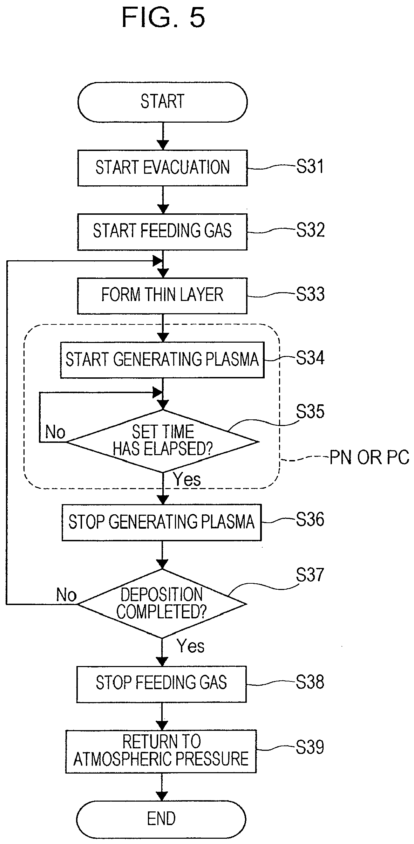

Fig. 5 is a flow chart of plasma nitridation. In the second embodiment, the shaped object manufacturing apparatus 100 shown in Fig. 1 is used as the nitrided powder producing apparatus, and the light source 110 and the scanning heater mechanism 106 are used as a heating unit for plasma nitridation. When the user has commanded the start of plasma nitridation by operating the operation unit 201, the controller 200 actuates the evacuation mechanism 103 to evacuate the chamber 101 (S31), as shown in Fig. 5. When the interior of the chamber 101 has reached a predetermined vacuum level (1 × 10⁻² Pa), the controller 200 actuates the gas feeding mechanism 102 to start feeding a gas (S32). When the interior of the chamber 101 has reached a pressure at which the process starts, the controller 200 actuates the thin layer-forming mechanism 105 to form a thin layer 104 of a raw material powder (S33). Then, the controller 200 actuates the power supply 113 to start plasma generation (S34), and the thin layer 104 is subjected to plasma nitridation PN until a set time has elapsed (during No in S35). At this time, the scanning heater mechanism 106 operates so that the laser beam LB emitted from the light source 110 at a lower power than in the first embodiment can evenly scan the entire surface of the thin layer 104 and thus help to heat the thin layer 104 being plasma-nitrided.

After the completion of the plasma nitridation PN of the thin layer 104 (Yes in S35), the controller 200 stops the power supply 113 to stop generating plasm at the nitrided thin layer 104' (S36). The controller 200 repeats the thin layer formation (S33), the plasma nitridation (S34 and S35), and the plasma generation stop (S36) until the number of times of lowering the deposition substrate 112 has reached the limit where the shaping container 107 becomes full (during No in S37). When the number of times of lowering the deposition substrate 112 has reached the limit (when Yes in S37), the controller 200 stops feeding the gas (S38) and feeds ambient air into the chamber 101 (S39). Then, the controller permits removing the nitrided powder. This permission is shown on a display 202.

As it has been described above, the shaped object manufacturing apparatus 100 repeats the thin layer formation and the plasma nitridation to deposit nitrided thin layers 104' in the shaping container 107, thus preparing a nitrided raw material powder. The nitridation of the raw material powder is accelerated by heating with the laser beam LB the thin layer 104 being subjected to plasma nitridation.

### Laser Beam Heating Formation Apparatus

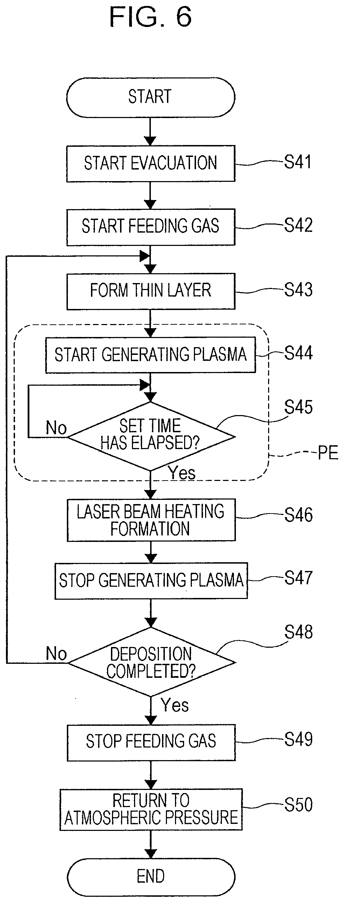

Fig. 6 is a flow chart of laser beam heating formation. In the second embodiment, the shaped object manufacturing apparatus 100 shown in Fig. 1 is used as a laser beam heating formation apparatus. The user commands the start of laser beam heating formation by operating the operation unit 201 in a state where the thin layer-forming mechanism 105 is filled with the nitrided raw material powder prepared by the plasma nitridation shown in Fig. 5, instead of the non-nitrided raw material powder in the first embodiment.

When the start of laser beam sintering is commanded, the controller 200 actuates the evacuation mechanism 103 to evacuate the chamber 101 (S41), as shown in Fig. 6. When the interior of the chamber 101 has reached a predetermined vacuum level (1 × 10⁻² Pa), the controller 200 actuates the gas feeding mechanism 102 to start feeding a gas (S42). When the interior of the chamber 101 has reached a pressure at which the process starts, the controller 200 actuates the thin layer-forming mechanism 105 to form directly a nitrided thin layer 104' in the shaping container 107 (S43). Then, the controller 200 actuates the power supply 113 to start plasma generation (S44), and the nitrided thin layer 104' is subjected to plasma etching PE until a set time has elapsed (during No in S45).

After the completion of the plasma etching PE of the nitrided thin layer 104' (when Yes in S45), the controller 200 actuates the scanning heater mechanism 106 and the light source 110 for laser beam heating formation of the nitrided thin layer 104' (S46). After the completion of the laser beam heating formation (S46) of the single nitrided thin layer 104', the controller 200 stops the power supply 113 to stop generating plasm at the nitrided thin layer 104' (S47).

The controller 200 repeats the thin layer formation (S43), the plasma nitridation (S44 and S45), the laser beam sintering (S46), and the plasma generation stop (S47) until the number of layers (the number of times of deposition) has reached a required number for obtaining the shaped object 301 (during No in S48). When the number of layers, or number of times of deposition, has reached the required number for obtaining the shaped object 301 (when yes in S48), the controller 200 stops feeding the gas (S49) and feeds ambient air into the chamber 101 (S50). Then, the controller permits removing the shaped object. This permission is shown on a display 202.

As it has been described above, the shaped object manufacturing apparatus 100 repeats the thin layer formation, the plasma etching, and the laser beam heating formation, thus producing a three-dimensional shaped object 301 defined by a stack of nitrided thin layers 104'.

### Third Embodiment

While the first embodiment employs laser beam heating formation for melting and solidifying nitrided layers, a third embodiment employs electron beam heating formation for melting and solidifying the nitrided layers.. Shaped Object Manufacturing Apparatus

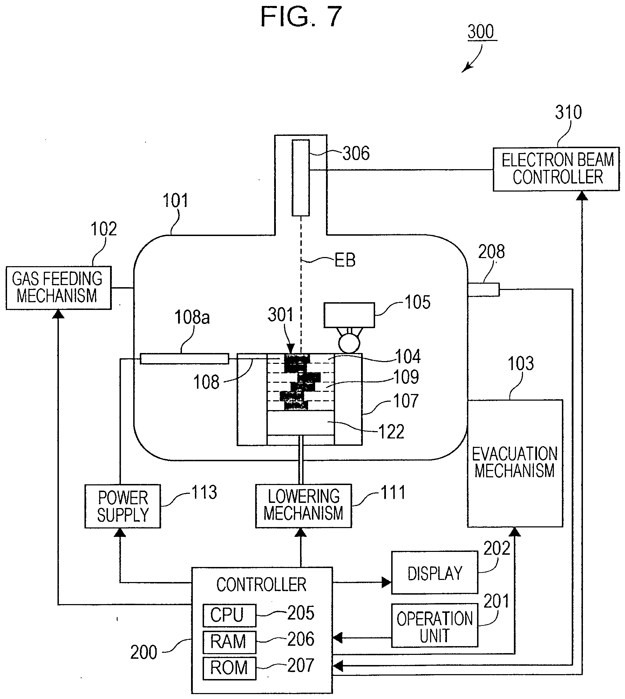

Fig. 7 is an illustrative representation of the shaped object manufacturing apparatus used in the third embodiment. The shaped object manufacturing apparatus of the third embodiment has the same configuration and performs the steps of plasma nitridation and heating formation in the same manner as the shaped object manufacturing apparatus of the first embodiment, as shown in Fig. 7, except that an electron beam is used for the heating formation of the nitrided thin layer, instead of the laser beam. Therefore, in Fig. 7, the same parts as in the first embodiment are designated by the same reference numerals as in Fig. 1, and thus description thereof is omitted.

The shaped object manufacturing apparatus 300 is what is called a 3D printer of a powder bed fusion type. The evacuation mechanism 103 evacuates the chamber 101. The gas feeding mechanism 102 feeds a gas to the chamber 101. The shaped object manufacturing apparatus 300 may be used as a nitrided powder producing apparatus for simply nitriding a raw material powder to produce only a nitrided powder.

### Electron Beam Heating/Melting Mechanism

The electron beam heater 306 heats a portion of each thin layer 104 to be solidified according to input data with a spot of an electron beam generated therefrom by scanning the electron beam. The generation of the electron beam from the electron beam heater 306 and the scanning of the electron beam are controlled by an electron beam controller 310.

The electron beam heater 306 heats the thin layer 104 at the top of the shaping container 107 with the electron beam, thereby substantially instantly melt the thin layer and solidify the layer to integrate with the underlying solid texture. Thus, a desired portion of the nitrided thin layer 104' at the top of the shaping container 107 is melted and solidified. At this time, it is advantageous to keep the nitrided thin layer 104' at a high temperature by energizing a resistor heater 137, as shown in Fig. 2. By heating the nitrided thin layer 104', the efficiency of melting the nitrided thin layer by electron beam heating is increased. Consequently, high-speed formation can be made even with a low-power electron beam. Thus, the variation of the melted state of the nitrided thin layers 104' can be reduced and, consequently, the resulting shaped object 301 can have a uniform texture. Vacuum Level during Electron Beam Heating Formation

In the shaped object manufacturing apparatus 300 of the third embodiment, the electron beam is scattered by gas molecules in the chamber 101. Accordingly, the degree of vacuum in the chamber 101 is reduced to 10⁻¹ Pa or less during the step of electron beam heating formation. Accordingly, in the shaped object manufacturing apparatus 300 of the third embodiment, plasma etching is performed at a vacuum of 100 Pa kept by feeding a mixture of nitrogen gas and hydrogen gas to the chamber, and then, electron beam heating formation is performed at a vacuum of 10⁻¹ Pa returned after stopping feeding the gas mixture.

### COMPARATIVE EXAMPLE 1

Comparative Example 1 uses the shaped object manufacturing apparatus of the third embodiment, but in which each layer of the raw material powder is subjected to electron beam fusion without being plasma-nitrided. Therefore, Comparative Example 1 will be described with reference to Fig. 7. In the third embodiment, while a metal material is being subjected to powder bed fusion, the material irradiated with an electron beam is brought into contact with a reaction gas containing nitrogen, as shown in Fig. 7. Thus layers of the metal material are deposited while the metal is nitrided. The interior of the chamber 101 is controlled to a desired vacuum level and a desired gas mixing ratio by using the gas feeding mechanism 102 and the evacuation mechanism 103. The thin layer-forming mechanism 105 forms thin layers 104 of a raw material powder within the chamber 101. The electron beam heater 306 performs electron beam fusion on each thin layer 104.

In Comparative Example 1, the raw material powder of the thin layer 104 is fused by irradiating the thin layer 104 with the electron beam. At this time, the metal raw material heated or melted by irradiation with the electron beam reacts with a reaction gas containing nitrogen in the chamber 101. The shaped object is thus nitrided.

Comparative Example 1 allows part of the metal to be nitrided and solidified, but does not provide a three-dimensional shaped object as hard as nitrided ceramics such as TiN, AlN, and SiN. It is probably for the following two reasons that the process of Comparative Example 1 does not produce a hard shaped object. First, the irradiation diameter of the electron beam is as small as several tens of micrometers to several hundreds of micrometers during fusing in the third embodiment, and irradiation time for fusing is as short as several tens of milliseconds for each spot. Such local and short-time irradiation is not practical for sufficiently nitriding metal particles.

Second, Comparative Example 1 requires that the chamber 101 be kept at a high vacuum level to secure an average free path length of the electron beam. Accordingly, an environment containing a high concentration of gas molecules for nitridation cannot be created in the chamber 101. For example, the distance at which the electron beam can scan a two-dimensional area of several centimeters on the surface of the deposition substrate 112 is at least several tens of centimeters. The degree of vacuum at which the electron beam can travel a distance of several tens of centimeters is 1.0 × 10⁻⁵ Pa to 1.0 × 10⁻² Pa. In such a thin gas atmosphere, the nitrogen concentration is insufficient to nitride the thin layer of the raw material powder. Consequently, the nitrogen content in the resulting three-dimensional shaped object is at most about 3% (in terms of number of atoms). The nitrided metal material produced in an atmosphere with such a low nitrogen concentration exhibits a hardness higher than metal, but much lower than nitrided ceramics.

The first embodiment allows plasma nitridation at least for several minutes in an atmosphere containing a high concentration of nitrogen at a pressure of about 0.1 atmosphere and thus eliminates the technical disadvantages of Comparative Example 1, consequently providing a hard shaped object 301.

### Other Embodiments

The methods for producing a nitrided powder and manufacturing a shaped object and the apparatuses for producing the nitrided powder and manufacturing the shaped object of the present disclosure are not limited to those including the components or members disclosed in the first to third embodiments or those performed under the numerical conditions and the control in the disclosed embodiments. Another embodiment may be realized by replacing one or more or all of the components or members of any of the first to third embodiments with an equivalent member or equivalent members.

The voltages and pressures used in Examples 1, 2, and 3 can be adjusted according to parameters, such as the size of the shaping container 107, the size of the raw material powder, and the thickness of the thin layers 104. For example, although only an alternating voltage is applied to the thin layer 104 in Examples 1, 2, and 3, a negative direct-current voltage may be superimposed on the alternating voltage to increase the collision speed of positive ions, thereby enhancing the performance of heating the thin layer 104.

In the first embodiment, while plasma is generated by applying a voltage to a thin layer 104, a mixture of hydrogen gas and nitrogen gas is continuously fed in a constant proportion. In the early stage of plasma generation, however, only hydrogen gas or hydrogen gas and an inert gas such as argon gas may be fed for sputtering cleaning of the raw material powder.

In the first embodiment, the layer being plasma-nitrided is heated with the resistor heater 137. This heating during plasma nitridation is however not always performed by using a heater. What is called sputtering heating may be performed by feeding a mixture of nitrogen gas and hydrogen gas and increasing the negative bias voltage superimposed on the alternating voltage applied to the thin layers 104.

The second embodiment illustrates a nitrided powder producing apparatus of what is called a batch process, in which the chamber 101 is returned to atmospheric pressure for each operation of plasma nitridation. However, in another embodiment, the nitrided powder producing apparatus may have an in-line configuration in which a processing section for plasma nitridation is connected to a depressurizing section through which the raw material powder is transferred from the air to the processing section and a vent section through which the nitrided raw material powder is transferred from the processing section to the air.

The second embodiment also illustrates a shaped object manufacturing apparatus in which a single shaping container 107 is disposed in a single chamber 101. The shaped object manufacturing apparatus however may have a plurality of shaping containers 107 for plasma nitridation and a single shaping container 107 for laser beam heating formation in the single chamber 101.

### Fourth Embodiment

In a fourth embodiment, a thin layer of a raw material is carbonized with plasma, and the thin layer of the carbonized powder is immediately melted by heating with a laser beam and then solidified. A stack of such layers defines a shaped object 301. For this embodiment, the same apparatus and method as in the first embodiment may be used for manufacturing the shaped object. The fourth embodiment will be described with reference to the same drawings as the first embodiment.

### Shaped Object Manufacturing Apparatus

Fig. 1 can be an illustrative representation of the shaped object manufacturing apparatus used in the fourth embodiment. Fig. 2 is an illustrative representation of a shaping container. As shown in Fig. 1, the shaped object manufacturing apparatus 100 is what is called a 3D printer of a powder bed fusion type. A chamber 101 is made of stainless steel and can be sealed. A vacuum gauge 208, which is a type of measuring device, is connected to the chamber 101 and measures the pressure in the chamber 101.

An atmosphere containing carbon and reduced oxygen is created by using a gas feeding mechanism 102, an evacuation mechanism 103 and the vacuum gauge 208 that constitute a type of atmosphere creating unit. The evacuation mechanism 103, which is a type of depressurizing device, can reduce the pressure in the chamber 101. The evacuation mechanism 103 evacuates the chamber 101 to reduce mainly oxygen. The evacuation mechanism 103 includes a dry pump and a turbo-molecular pump connected to the dry pump in series and can evacuate the chamber 101 up to a vacuum of, for example, 1 × 10⁻⁴ Pa.

The evacuation mechanism 103 is provided with an opening adjustment valve capable of adjusting the opening size at the joint with the chamber 101. A controller 200 can control the interior of the chamber 101 to a desired atmosphere and vacuum level by controlling the opening adjustment valve according to the output of the vacuum gauge 208 while feeding a gas to the chamber 101 from the gas feeding mechanism 102.

The gas feeding mechanism 102, which is a type of feeder, feeds a hydrocarbon gas containing carbon and hydrogen into the chamber 101. The gas feeding mechanism 102 can feed a mixture of a hydrocarbon gas and hydrogen gas with a desired proportion into the chamber 101. Two gas feeding mechanisms may feed the hydrocarbon gas and hydrogen gas separately.

Turning to Fig. 2, the shaping container 107, which is a type of powder container, includes a shaping section 109, and a deposition substrate 112 is vertically movably disposed within the shaping section 109. A lowering mechanism 111 can lower the deposition substrate 112 step by step at a pitch according to the thickness of the thin layers. In the shaping section 109, carbonized thin layers 104'; each converted from a thin layer 104 by carbonization build a stack.

A resistor heater 137, which is a type of heater, is embedded in the wall of the shaping section 109 so that the thin layers 104 can be heated. Furthermore, the deposition substrate 112 is provided with a temperature sensor 209 on the surface thereof. The controller 200 controls the on/off of the current for energizing the resistor heater 137 according to the output of the temperature sensor 209, thus heating the thin layer 104 so as to keep the thin layer at a constant temperature.

A thin layer-forming mechanism 105, which is a type of forming device, forms the thin layers 104 of the raw material powder in the shaping section 109 of the shaping container 107 disposed in the chamber 101. The thin layer-forming mechanism 105 includes a moving portion 133 that moves with guide by a guide 132 in the direction indicated by arrow R105 along the top plane of the shaping container 107. The raw material powder 135 is stored in a raw material section 130 and is lifted to a position higher than the top plane of the shaping container 107 by raising a bottom plate 134. The thin layer-forming mechanism 105 forms a highly dense thin layer 104 of the raw material powder 135 to a uniform thickness at the top plane of the shaping section 109 by leveling off the raw material powder at the top plane of the shaping container 107 while rotating the metal roller 131 in the counter direction to the top plane of the shaping container 107. The thin layer-forming mechanism 105 further forms another thin layer 104 of the raw material powder on the carbonized thin layer 104' converted from the thin layer 104 previously formed in the shaping section 109. The stack of the carbonized thin layers 104' and the thin layer 104 thus formed in the shaping section 109 is electrically separated from the chamber 101.

### Shaping Container

As shown in Fig. 1, the shaping container 107 is electrically isolated from the chamber 101. The shaping container 107 and the deposition substrate 112 are made of an insulating material so as to avoid generating plasma at the surfaces thereof. Hence, the surface of the shaping container 107 that will come in contact with the thin layer 104 is made of an insulating material. A voltage is applied to the thin layer 104 of the raw material powder from a power supply 113 through an electrode 108 (power supply device). The electrode 108 is covered with a cover 108a made of an insulating material to avoid generating plasma at the surface thereof in the chamber 101.

In the fourth embodiment, an alternating voltage is applied to the thin layer 104 of the raw material powder by using the insulating shaping container 107 and the electrode 108. This structure is efficient for plasma carbonization of the thin layer 104. In general, the raw material powder is less conductive even though it is a metal powder because the surface of the powder is covered with a passivation film. Therefore, it has been conventionally believed that a member such as a coil or a flat electrode must be disposed close to the raw material powder for plasma generation. In the shaped object manufacturing apparatus 100, however, it is difficult to dispose the member such as a flat electrode right above the thin layer 104 because a light path must be secured for laser beam irradiation. In addition, if the member such as a flat electrode is disposed right above the thin layer 104 so as to avoid interference with the thin layer-forming mechanism 105 moving in a horizontal direction, the member must be physically retracted every time a thin layer 104 is formed. Since the formation of a thin layer is repeated several hundred to several thousand times for producing one shaped object 301, it is inefficient to physically retract the member. In the fourth embodiment, accordingly, an alternating voltage is applied to the electrode 108 in contact with the thin layer 104 in a state where the shaping container 107 holding the thin layer 104 is electrically isolated from the chamber 101. This configuration enables plasma containing carbon ions to be generated uniformly over the entire surface of the thin layer 104 without using a flat electrode or the like, so that the raw material powder can be uniformly and rapidly carbonized.

### Plasma Carbonization

The shaped object manufacturing apparatus 100 generates plasma in a space adjacent to the thin layer 104 of the raw material powder formed in the shaping container 107 by applying an alternating voltage to the thin layer 104, as shown in Figs. 1 and 2. The shaped object manufacturing apparatus 100 holds the thin layer 104 formed as the first layer on the deposition substrate 112 or the thin layer 104 formed as the second or subsequent thin layer 104 on a carbonized thin layer 104' in the plasma containing carbon ions and hydrogen ions and thus carbonize the thin layer.

The power supply 113 and the electrode 108, which constitute a type of power supply device, apply an alternating voltage to the thin layer 104. The power supply 113 applies the alternating voltage to the thin layer 104 through the electrode 108 in contact with the thin layer 104 or a carbonized thin layer 104' in the shaping container 107. The power supply 113 can output an alternating voltage superimposed with a direct current voltage. The direct current can be set stepwise from -500 V to +500 V. The amplitude and the frequency of the alternating voltage can be set stepwise from 0 V to 2000 V and from 10 kHz to 500 kHz, respectively.

The controller 200 actuates the power supply 113 while feeding a hydrocarbon gas to the chamber 101 to keep the vacuum level in the range of 1 Pa to less than 20 kPa. Thus, plasma is locally generated in a space adjacent to the thin layer 104, and the raw material powder of the thin layer 104 is efficiently exposed to the plasma. At this time, the resistor heater 137 may be energized to auxiliarily heat the thin layer 104 of the raw material powder on the deposition substrate 112, as shown in Fig. 2. The carbonization efficiency is thus increased. This auxiliary heating may be performed by using a laser beam, instead of the resistor heater 137 or simultaneously with the use of the resistor heater 137. More specifically, the thin layer 104 may be heated to the extent that the thin layer 104 is not melted by being irradiated with a laser beam (described later) whose powder is reduced or whose spot area is increased.

### Laser Beam Heating Formation

A scanning heater mechanism 106 irradiates a carbonized thin layer 104' converted by plasma carbonization from a thin layer 104 with a laser beam, which is a type of energy beam, as shown in Fig. 1. The scanning heater mechanism 106 heats a portion of the carbonized thin layer 104' to be solidified according to input data of the shaping object 301 with a spot of a laser beam emitted from the light source 110 by scanning the laser beam with a Galvano mirror 106m. The light source 110 is a YAG laser oscillator having a power of 500 W.

The scanning heater mechanism 106, which is a type of beam irradiator, heats the carbonized thin layer 104' at the top of the shaping section 109 in the shaping container 107 with the laser beam, thereby substantially instantly melt the carbonized thin layer 104' and solidify this layer to integrate with the underlying solid texture. Thus, a desired portion of the carbonized thin layer 104' at the top of the shaping section 109 is melted and solidified. At this time, it is desirable to keep the carbonized thin layer 104' at a high temperature during the laser beam heating formation by continuing the above-described plasma carbonization, that is, by energizing the resistor heater 137. By keeping the carbonized thin layer 104' at a high temperature, the efficiency of the laser beam heating formation is increased. Consequently, high-speed formation can be made even with a low-power laser beam. Thus, the variation of the melted state of the carbonized thin layers 104' can be reduced and, consequently, the resulting shaped object 301 can have a uniform texture.

The heat for this laser beam heating formation promotes the carbonization of the powder being carbonized in the carbonized layers 104'. It is therefore not necessary that the raw material powder is completely carbonized by the plasma carbonization. In other words, carbonization may be completed to an intended extent by finally melting the powder by laser beam heating formation performed at the stage where the raw material powder has been roughly carbonized by plasma carbonization. Thus, the time for carbonization can be reduced, and, accordingly, the time for manufacturing the shaped object 301 can be reduced.

### Process for Manufacturing Shaped Object

Fig. 3 is a flow chart of a process for manufacturing the shaped object, and Figs. 4A to 4F are illustrative representations of building a stack in the shaped object manufacturing apparatus. As shown in Fig. 1, the controller 200 includes a CPU 205, a RAM 206, and a ROM 207. A process control program called from the ROM 207 is stored in the RAM 206, and thus the CPU 205 functions as a process controller. The user commands the start of a process by using an operation unit 201.

When the start of the process has been commanded, the controller 200 actuates the evacuation mechanism 103 to evacuate the chamber 101 (S11), as shown in Fig. 3. When the pressure in the chamber 101 has reached 1 × 10⁻² Pa, the gas feeding mechanism 102 starts to feed a gas to control the chamber 101 to a process pressure of less than atmospheric pressure (S12). In the step of creating an atmosphere through these steps S11 and S12, the chamber 101 is evacuated to a first pressure, and then a substance containing carbon is fed to the chamber 101, as shown in Fig. 1. Thus, an atmosphere having a second pressure higher than the first pressure and lower than atmospheric pressure is created in the chamber 101.

When the interior of the chamber 101 has reached the second pressure (for example, 10 kPa), the controller 200 actuates the thin layer-forming mechanism 105 to form a thin layer 104 of the raw material powder (S13), as shown in Fig. 3. In the step of lowering shown in Fig. 4A, the lowering mechanism 111 is actuated to lower the deposition substrate 112, thereby forming a space for forming a thin layer 104 therein in the shaping container 107. In the step of forming or step S13, the thin layer-forming mechanism 105 is actuated to form a thin layer 104 of the raw material powder on the deposition substrate 112, as shown in Fig. 4B.

The controller 200 actuates the power supply 113 to start plasma generation (S14), as shown in Fig. 3, and the thin layer 104 is subjected to plasma carbonization PC until a set time has elapsed (during No in S15). In the step of carbonization including steps S14 and S15, the gas feeding mechanism 102 and the power supply 113 are actuated to plasma-carbonize the thin layer 104 of the raw material powder on the deposition substrate 112, as shown in Fig. 4C. In the carbonization step, an alternating voltage is applied to the thin layer 104 from the power supply 113 to generate plasma in an atmosphere containing carbon, hydrogen, and reduced oxygen, thereby carbonizing the raw material powder of the thin layer 104. The carbonization step is performed in the atmosphere created in the chamber 101 under a pressure lower than atmospheric pressure (preferably in the range of 1 Pa to less than 20 kPa). The carbonization step follows the step of forming the thin layer 104 in the shaping container 107 disposed in and electrically isolated from the chamber 101. Also, the carbonization step is performed on the thin layer 104 kept at a constant temperature by being heated with a resistor heater 137.

When a set time has elapsed (when Yes in S15), the controller 200 actuates the scanning heater mechanism 106 and the light source 110 to perform laser beam heating formation on the nitrided thin layer 104' (S16), as shown in Fig. 3. In the step of beam formation including Step S16, the scanning heater mechanism 106 and the light source 110 are actuated to perform the laser beam heating formation, thus melting and solidifying the carbonized thin layer 104' on the deposition substrate 112, as shown in Fig. 4D. In the beam formation step, the portion of the carbonized thin layer 104' to be solidified is irradiated with an energy beam, thereby being solidified. This beam formation step is performed with the plasma carbonization PC of the carbonized thin layer 104' performed by applying an alternating voltage to the carbonized thin layer 104' in an atmosphere containing carbon, hydrogen, and reduced oxygen.

After the completion of the laser beam heating formation (S16) of the single carbonized thin layer 104', the controller 200 stops the power supply 113 to stop generating plasm at the carbonized thin layer 104' (S17), as shown in Fig. 3. The controller 200 repeats the thin layer formation (S13), the plasma carbonization (S14 and S15), the laser beam heating formation (S16), and the plasma generation stop (S17) until the number of layers (the number of times of deposition) has reached a required number for obtaining the shaped object 301 (during No in S18). In the second or subsequent lowering step, the lowering mechanism 111 is actuated to lower the deposition substrate 112, thereby forming a space for forming another thin layer 104 of the raw material powder over the partially solidified carbonized thin layer 104', as shown in Fig. 4E. In the second forming step, the thin layer-forming mechanism 105 is actuated to form a thin layer 104 of the non-carbonized raw material powder on the carbonized thin layer 104' formed on the deposition substrate 112 in the shaping container 107, as shown in Fig. 4F.

As shown in Fig. 3, when the number of layers, or number of times of deposition, has reached the required number for obtaining the shaped object 301 (when yes in S18), the controller 200 stops feeding the gas (S19) and feeds ambient air into the chamber 101 (S20). Then, the controller permits removing the shaped object. This permission is shown on a display 202.

As it has been described above, the shaped object manufacturing apparatus 100 repeats the thin layer formation, the plasma carbonization, and the laser beam heating formation, thus producing a three-dimensional shaped object 301 defined by a stack of solidified portions of the carbonized thin layers 104'.

### Materials of Shaped Object

Samples of the shaped object 301 were formed in Examples 4 to 6 using different materials and different plasma carbonization conditions in the above-described shaped object manufacturing apparatus 100, and the physical properties and other properties of the samples were examined.

### EXAMPLE 4

In Example 4, a tungsten raw material powder was subjected to plasma carbonization and laser beam heating formation under the following conditions.

### Conditions for Plasma Carbonization

Pressure in Chamber: 1.3 kPa
Gas to be fed: Mixture of methane gas and hydrogen gas in a ratio of 1:1
Raw material powder: tungsten powder having a particle size of 3 µm produced by gas atomization
Thickness of thin layers: 20 µm
Voltage applied: alternating voltage of 1 kV with a frequency of 100 kHz
Plasma carbonation time for each layer: 5 minutes

### Conditions for Laser Beam Heating Formation

Portion to be melted: a square portion of 25 mm by 25 mm of the carbonized thin layer
Number of layers: 2000
Height of stack: 40 mm

The resulting shaped object 301 of Example 4 was analyzed for the carbon content by XPS (X-ray photoemission spectroscopy), and the result was 22% (in terms of number of atoms). Also, the density of the shaped object 301 measured by the Archimedean method was 99.2%. The hardness HV of the shaped object 301 measured with a Vickers hardness meter was 3200. Thus, it was confirmed that a shaped object 301 that is as hard as cemented tungsten carbide produced by an ordinary powder sintering method was produced under the conditions of Example 4.

### EXAMPLE 5

In Example 5, a silicon raw material powder was subjected to plasma carbonization and laser beam heating formation under the following conditions.

### Conditions for Plasma Carbonization

Pressure in Chamber: 3.9 kPa
Gas to be fed: Mixture of carbon dioxide gas and hydrogen gas in a ratio of 1:1
Raw material powder: silicon powder having a particle size of 5 µm produced by water atomization
Thickness of thin layers: 20 µm
Voltage applied: alternating voltage of 20 kV with a frequency of 100 kHz
Plasma carbonation time for each layer: 10 minutes

### Conditions for Laser Beam Heating Formation

Portion to be melted: a square portion of 25 mm by 25 mm of the carbonized thin layer
Number of layers: 100
Height of stack: 4 mm

In Example 5, the thin layer 104 and the stack of the carbonized thin layers 104' were kept at 500°C throughout the operation for plasma carbonization and laser beam heating formation by heating with the resistor heater 137. By keeping the thin layer 104 and the stack of the carbonized thin layers 104' at a high temperature, the speed of the reaction with carbon can be further increased. In Example 5, the carbonized thin layer 104' was subjected to the laser beam heating formation by being irradiated with a laser beam while plasma carbonization is continued. This operation enables the stack of carbonized thin layers 104' as well as the thin layer 104 to be continuously doped with elemental carbon.

The resulting shaped object 301 of Example 5 was analyzed for the carbon content by XPS (X-ray photoemission spectroscopy), and the result was 40% (in terms of number of atoms). Also, the density of the shaped object 301 measured by the Archimedean method was 99.6%. The hardness HV of the shaped object 301 measured with a Vickers hardness meter was 2900. Thus, it was confirmed that a shaped object 301 that is as hard as silicon carbide produced by an ordinary powder sintering method was produced under the conditions of Example 5.

### EXAMPLE 6

In Example 6, a silicon raw material powder was subjected to plasma carbonization and laser beam heating formation under the following conditions.

### Conditions for Plasma Carbonization

Pressure in Chamber: 13.3 kPa
Gas to be fed: Mixture of methane gas, hydrogen gas, and argon gas in a ratio of 1:2:1
Raw material powder: silicon powder having a particle size of 5 µm produced by water atomization
Thickness of thin layers: 40 µm
Voltage applied: alternating voltage of 20 kV with a frequency of 100 kHz
Plasma carbonation time for each layer: 5 minutes

### Conditions for Laser Beam Heating Formation

Portion to be melted: a square portion of 25 mm by 25 mm of the carbonized thin layer
Number of layers: 100
Height of stack: 4 mm

In Example 6, the thin layer 104 and the stack of the carbonized thin layers 104' were kept at 800°C throughout the operation for plasma carbonization and laser beam heating formation by auxiliary heating with the resistor heater 137. By keeping the thin layer 104 and the stack of the carbonized thin layers 104' at a high temperature, the speed of the reaction of silicon with carbon can be further increased. In Example 6, the carbonized thin layer 104' was subjected to the laser beam heating formation by being irradiated with a laser beam while plasma carbonization is continued. This operation enables the stack of carbonized thin layers 104' as well as the thin layer 104 to be continuously doped with elemental carbon.

The resulting shaped object 301 of Example 6 was analyzed for the carbon content by XPS (X-ray photoemission spectroscopy), and the result was 11% (in terms of number of atoms). Also, the density of the shaped object 301 measured by the Archimedean method was 99.2%. The hardness HV of the shaped object 301 measured with a Vickers hardness meter was 3000. Thus, it was confirmed that a shaped object 301 that is as hard as silicon carbide produced by an ordinary CVD method was produced.

### Advantage of Fourth Embodiment

In the fourth embodiment, each thin layer 104 of a raw material powder is directly plasma-carbonized as it is. Therefore, the carbon content in the carbonized thin layers 104' can be increased to a desired level by expanding the time for plasma generation. By controlling the time for plasma generation, the carbon content in the carbonized thin layers 104' can be accurately controlled.

In the fourth embodiment, since the raw material powder of the thin layer 104 is carbonized in an atmosphere containing carbon and reduced oxygen, the raw material powder is prevented from being oxidized to form a passivation film, and consequently the penetration speed of carbon can be increased. Also, since plasma is generated by applying an alternating voltage to the thin layer 104, an electrode or a coil need not be disposed over the thin layer 104.

In the fourth embodiment, since the raw material powder of the thin layer 104 is carbonized in an atmosphere containing hydrogen by generating plasma at the thin layer 104, the oxide film covering the surface of the raw material powder is reduced to eliminate the passivation film, and consequently the penetration speed of carbon can be increased.

In the fourth embodiment, since plasma is generated in an atmosphere having a pressure lower than atmospheric pressure created in the chamber 101, the plasma is kept more stable than in the case of generating plasma in an atmosphere having a pressure higher than or equal to atmospheric pressure.

In the fourth embodiment, the shaped object is produced in an atmosphere having a pressure in the range of 1 Pa to less than 20 kPa, created in the chamber 101. Thus, the raw material powder can contain carbon with a higher content compared with the case of generating plasma at a higher vacuum level than in the fourth embodiment.

In the fourth embodiment, the chamber 101 is evacuated to a first pressure, and then a substance containing carbon is fed to the chamber 101 to create an atmosphere having a second pressure. Thus, oxygen is much reduced from the atmosphere in which plasma will be generated. By much reducing pressure, oxygen and moisture are removed from the raw material powder. Thus, the atmosphere for the carbonization is prevented from being contaminated.

In the fourth embodiment, the thin layer 104 is formed in the shaping container 107 electrically isolated from the chamber 101, and plasma is generated therein. Thus, current leakage caused when an alternating voltage is applied to the raw material powder is reduced, and accordingly, the thin layer 104 can be efficiently carbonized by concentrating plasm at the interface with the thin layer.

In the fourth embodiment, the thin layer 104 is carbonized in a state where the thin layer 104 is kept at a constant temperature by being heated with a heater. This heating increases the carbonization speed of the raw material powder and, in addition, reduces the variation of the state of the carbonized raw material powder in the layers from the first layer to the last layer.

In the fourth embodiment, the raw material powder is metal particles produced by water atomization. Accordingly, the material cost is reduced compared with that in the case of using metal particles produced by gas atomization. Although metal particles produced by water atomization are, in general, coated with a thick passivation film, the passivation film can be reduced by reaction with hydrogen ions, and thus carbon can be efficiently introduced into the raw material powder.

In the fourth embodiment, another thin layer 104 is formed on a carbonized thin layer 104' converted from a thin layer 104 previously formed in the shaping section 109 of the shaping container 107. Thus, a large amount of raw material powder can be carbonized even if the chamber 101 has a small bottom area or the shaping container 107 has a small flat area.

In the fourth embodiment, the portion of the carbonized thin layer 104' to be solidified is irradiated with a laser beam LB, thereby being solidified. The laser beam does not attenuate or scatter even at a low vacuum level. Unlike an electron beam, the laser beam can efficiently heat the carbonized thin layer 104' even at a low vacuum of 1 Pa to less than 20 kPa without scattering. Also, the carbonized thin layer 104' can immediately be subjected to laser beam heating formation without being exposed to ambient air.

In the fourth embodiment, the atmosphere in the range of 1 Pa to less than 20 kPa is kept during irradiation with the laser beam LB. Thus, the free path length of gas molecules in the chamber 101 is reduced, and, consequently, the constituents of the raw material powder are prevented from being deposited on the irradiation window 106e (shown in Fig. 1) for the laser beam LB.

In the fourth embodiment, plasma is generated also during irradiation with the laser beam LB by applying an alternating voltage to the carbonized thin layer 104' in the atmosphere containing carbon, hydrogen, and reduced oxygen. Thus, carbon in the carbonized thin layer 104' that will be lost by heating with the laser beam LB is supplemented, and the carbonized thin layer 104' is further carbonized.

In the fourth embodiment, an alternating voltage is applied to the thin layer 104 in the insulating shaping container 107. Thus, plasma is concentrated at the interface with the thin layer 104 without generating plasma in the shaping container 107.

In the fourth embodiment, an alternating voltage is applied through the electrode 108 that is in contact with the thin layer 104 or a carbonized thin layer 104' in the shaping container 107. At this time, since the thin layer 104 conducts the alternating voltage and thus acts as a discharge electrode, a member such as a plat electrode for conducting the alternative voltage to the entirety of the thin layer 104 is not necessary.

In the fourth embodiment, plasma can be generated only at the thin layer 104 by applying an alternating voltage only to the thin layer 104. Thus, the thin layer 104 is efficiently doped with nitrogen ions from the plasma through the interface therewith. High-speed, high-concentration plasma carbonization is thus performed. Carbon Content in Shaped Object

In the fourth embodiment 4, the shaped object 301 is produced by growing crystals continuously from the crystal nucleuses in the underlying layer, in the same manner as in what is called the zone melting method. Hence, the shaped object 301 has a crystalline texture in which the crystals have grown in parallel in the direction from the first layer to the last layer, each produced by melting the carbonized thin layer 104' converted from a thin layer 104 of the raw material powder with the laser beam LB and then solidifying the carbonized layer. The shaped object 301 contains 10% or more of carbon in terms of number of atoms and is uniformly carbonized not only at the surface thereof, but also throughout the inside.

In the fourth embodiment, the carbon content in the shaped object 301 is 10% or more (in terms of number of atoms). There has been no technique for adding such a high content of carbon to a raw material of metal powder. One of the reasons of such a high carbon content is that plasma carbonization enables the raw material powder to be efficiently doped with carbon atoms. Another reason is that elemental carbon can be secured sufficiently for carbonization reaction since the vacuum level in the chamber 101 is not much high. If a stack of thin layers for the shaped object 301 is carbonized, only the surface of the stack is carbonized without uniformly carbonizing the inside of the stack. Even though each of the thin layers is subjected to carbonization, if the thin layers are not fully carbonized, only the surfaces of the thin layers, but not the inside of the layers, are carbonized, and the carbon content in the resulting shaped object 301 becomes uneven in the direction in which the layers are deposited. In the fourth embodiment, by carbonizing each thin layer 104 in a plasma atmosphere, not only the surface of the thin layer, but also the inside, can be carbonized. Thus, the carbon content is increased uniformly throughout the shaped object 301 including the inside.

### Density of Shaped Object

As described above, there is an after-deposition sintering process, as one of the powder bed deposition techniques, for manufacturing a three-dimensional shaped object that is as hard as ceramics. In this process, a shaped object of a raw material powder containing a resin as a binder is formed, and then the raw material powder is sintered while the binder is heated and burned. Unfortunately, in the after-deposition sintering technique, many pores are formed in the resulting texture because the powder particles are bound by sintering, and the density of the resulting three-dimensional shaped object is not more than about 85%. In addition, high-temperature sintering increases the density of the shaped object, but promotes contraction that can reduce the precision of the shaped object.

On the other hand, in the powder bed fusion method, which is performed in an atmosphere of air containing oxygen, since the thin layers of a metal raw material powder, such as an iron alloy powder or a titanium alloy powder, are each formed through the laser beam heating formation, a dense component having a density of about 99% can be obtained.

In particular, the Examples of the fourth embodiment can produce dense components of a metal carbide having a texture hardly containing pores with a density of 99.0% or more. The fourth embodiment can produce a three-dimensional shaped object 301 of a metal carbide having a density higher than or equal to the density of three-dimensional shaped objects produced by the known powder bed fusion of a metal material and having as high a hardness as carbonized ceramic components produced by powder sintering.

### Fifth Embodiment

In the fourth embodiment, plasma carbonization is followed by laser beam heating formation in the same shaped object manufacturing apparatus. In a fifth embodiment, a raw material powder plasma-carbonized in a carbonized powder producing apparatus is shaped into a shaped object 301 in a shaped object manufacturing apparatus different from the carbonized powder producing apparatus by laser beam heating formation. For the fifth embodiment, the same apparatus and method as in the second embodiment may be used for manufacturing the shaped object. The fifth embodiment will be described with reference to the same drawings as the second embodiment.

### Carbonized Powder Producing Apparatus

Fig. 5 shows a flow chart of plasma carbonization as well as plasma nitridation. In the fifth embodiment, the shaped object manufacturing apparatus 100 shown in Fig. 1 is used as the carbonized powder producing apparatus, and the light source 110 and the scanning heater mechanism 106 are used as an auxiliary heating unit for plasma carbonization.

When the user has commanded the start of plasma carbonization by operating the operation unit 201, the controller 200 actuates the evacuation mechanism 103 to evacuate the chamber 101 (S31), as shown in Fig. 5. When the interior of the chamber 101 has reached a predetermined vacuum level (1 × 10⁻² Pa), the controller 200 actuates the gas feeding mechanism 102 to start feeding a gas (S32). When the interior of the chamber 101 has reached a pressure at which the process starts, the controller 200 actuates the thin layer-forming mechanism 105 to form a thin layer 104 of a raw material powder (S33). Then, the controller 200 actuates the power supply 113 to start plasma generation (S34), and the thin layer 104 is subjected to plasma carbonization PC until a set time has elapsed (during No in S35). At this time, the scanning heater mechanism 106 operates so that the laser beam LB emitted from the light source 110 at a lower power than in the fourth embodiment can evenly scan the entire surface of the thin layer 104 and thus help to heat the thin layer 104 being plasma-carbonized.

When the set time has elapsed (when Yes in S35), the controller 200 stops the power supply 113 to stop generating plasm at the carbonized thin layer 104' (S36). The controller 200 repeats the thin layer formation (S33), the plasma carbonization (S34 and S35), and the plasma generation stop (S36) until the number of times of lowering the deposition substrate 112 has reached the limit where the shaping container 107 becomes full (during No in S37). When the number of times of lowering the deposition substrate 112 has reached the limit (when Yes in S37), the controller 200 stops feeding the gas (S38) and feeds ambient air into the chamber 101 (S39). Then, the controller permits removing the carbonized powder. This permission is shown on a display 202.

As it has been described above, the controller 200 repeats the thin layer formation (S33) and the plasma carbonization (S34 and S35) to deposit carbonized thin layers 104' in the shaping container 107, thus preparing a nitrided raw material powder. The controller 200 increases the carbonization speed of the raw material powder by auxiliarily heating with the laser beam LB the thin layer 104 being subjected to plasma carbonization.

### Laser Beam Heating Formation Apparatus

Fig. 6 is a flow chart of laser beam heating formation. In the fifth embodiment, a shaped object manufacturing apparatus 100 different from the shaped object manufacturing apparatus shown in Fig. 1 used as a carbonized powder producing apparatus is used as a laser beam heating formation apparatus. The user commands the start of laser beam heating formation by operating the operation unit 201 in a state where the thin layer-forming mechanism 105 is filled with the carbonized raw material powder prepared by the plasma carbonization PC shown in Fig. 5, instead of the non-carbonized raw material powder in the fourth embodiment.

When laser beam heating formation is commanded, the controller 200 actuates the evacuation mechanism 103 to evacuate the chamber 101 (S41), as shown in Fig. 6. When the interior of the chamber 101 has reached a predetermined vacuum level (1 × 10⁻² Pa), the controller 200 actuates the gas feeding mechanism 102 to feed argon gas and hydrogen gas to the chamber 101 (S42). When the interior of the chamber 101 has reached a pressure at which the process starts, the controller 200 actuates the thin layer-forming mechanism 105 to form directly a carbonized thin layer 104' in the shaping container 107 (S43). Then, the controller 200 actuates the power supply 113 to start plasma generation (S44), and the thin layer 104 is subjected to plasma treatment PS until a set time has elapsed (during No in S45).

When the set time has elapsed (when Yes in S45), the controller 200 actuates the scanning heater mechanism 106 and the light source 110 to perform laser beam heating formation on the nitrided thin layer 104' (S46). After the completion of the laser beam heating formation (S46) of the single carbonized thin layer 104', the controller 200 stops the power supply 113 to stop generating plasm (S47).

The controller 200 repeats the thin layer formation (S43), the plasma treatment (S44 and S45), and the laser beam heating formation (S46) until the number of layers (the number of times of deposition) has reached a required number for obtaining the shaped object 301 (during No in S48). When the number of layers, or number of times of deposition, has reached the required number for obtaining the shaped object 301 (when yes in S48), the controller 200 stops feeding the gas (S49) and feeds ambient air into the chamber 101 (S50). Then, the controller permits removing the shaped object. This permission is shown on a display 202.

For the plasma treatment PS, the raw material powder of the carbonized thin layer 104' is held in a plasma containing ions of argon that is an inert element, hydrogen ions, and free electrons. The plasma treatment using argon ions and free electrons is intended to produce what is called the sputtering cleaning effect. Foreign matter attached to the surfaces of the powder particles of the carbonized thin layer 104' is removed from the powder by collision of argon ions. Also, the surfaces of raw material powder particles are heated by collision of free electrons, and thus the foreign matter is removed by evaporation.

The plasma treatment using hydrogen ions is intended to remove the passivation coating film mainly from the surfaces of raw material powder particles by what is called a reduction reaction. Thus, the particles have crystal-reactive surfaces from which an oxide coating film is removed. Consequently, the raw material powder particles are likely to be fused together even at relatively low temperature, thus forming crystals having irregularities of the lattice.

As it has been described above, the controller 200 repeats the thin layer formation, the plasma treatment, and the laser beam heating formation, thus producing a three-dimensional shaped object 301 defined by a stack of the carbonized thin layers 104'.

### Sixth Embodiment

While the fourth embodiment employs a laser beam heating formation for melting and solidifying carbonized layers, a sixth embodiment employs electron beam heating formation for melting and solidifying carbonized layers. For the sixth embodiment, the same apparatus and method as in the third embodiment may be used for manufacturing the shaped object. The sixth embodiment will be described with reference to the same drawing as the third embodiment. Shaped Object Manufacturing Apparatus

Fig. 7 is an illustrative representation of the shaped object manufacturing apparatus used in the sixth embodiment. The shaped object manufacturing apparatus of the sixth embodiment has the same configuration and performs the steps of plasma carbonization and heating formation in the same manner as the shaped object manufacturing apparatus of the fourth embodiment, as shown in Fig. 7, except that an electron beam is used for the heating formation of the carbonized thin layer, instead of the laser beam. Therefore, in Fig. 7, the same parts as in the fourth embodiment are designated by the same reference numerals as in Fig. 1, and thus description thereof is omitted.

The shaped object manufacturing apparatus 300 is what is called a 3D printer of a powder bed fusion type. The evacuation mechanism 103 evacuates the chamber 101. The gas feeding mechanism 102 feeds a gas containing carbon to the chamber 101. The shaped object manufacturing apparatus 300 may be used as a carbonized powder producing apparatus for simply carbonizing a raw material powder to produce only a carbonized powder, as in the fifth embodiment.

### Electron Beam Heating/Melting Mechanism

The electron beam heater 306 heats a portion of each thin layer 104 to be solidified according to input data with a spot of an electron beam generated therefrom by scanning the electron beam.

The generation of the electron beam from the electron beam heater 306 and the scanning of the electron beam are controlled by an electron beam controller 310.

The electron beam heater 306 heats the thin layer 104 at the top of the shaping container 107 with the electron beam, thereby substantially instantly melt the thin layer and solidify the layer to integrate with the underlying solid texture. Thus, a desired portion of the carbonized thin layer 104' at the top of the shaping container 107 is melted and solidified. At this time, it is advantageous to keep the carbonized thin layer 104' at a high temperature by energizing a resistor heater 137, as shown in Fig. 2. By heating the carbonized thin layer 104', the efficiency of melting the carbonized thin layer by electron beam heating is increased. Consequently, high-speed formation can be made even with a low-power electron beam. Thus, the variation of the melted state of the carbonized thin layers 104' can be reduced and, consequently, the resulting shaped object 301 can have a uniform texture.

### Vacuum Level during Electron Beam Heating Formation

In the shaped object manufacturing apparatus 300 of the sixth embodiment, the electron beam is scattered by gas molecules in the chamber 101. Accordingly, the degree of vacuum in the chamber 101 is reduced to 10⁻¹ Pa or less during the step of electron beam heating formation. Accordingly, in the shaped object manufacturing apparatus 300 of the sixth embodiment, plasma etching is performed at a vacuum of 100 Pa kept by feeding a mixture of a hydrocarbon gas and hydrogen gas to the chamber, and then, electron beam heating formation is performed at a vacuum of 10⁻¹ Pa returned after stopping feeding the gas mixture.

### COMPARATIVE EXAMPLE 2

Comparative Example 2 uses the shaped object manufacturing apparatus of the sixth embodiment, but in which each layer of the raw material powder is subjected to electron beam fusion without being plasma-nitrided. Therefore, Comparative Example 2 will be described with reference to Fig. 7. In the sixth embodiment, while a metal material is being subjected to powder bed fusion, the material irradiated with an electron beam is brought into contact with a reaction gas containing carbon, as shown in Fig. 7. Thus layers of the metal material are deposited while the metal is carbonized. The interior of the chamber 101 is controlled to a desired vacuum level and a desired gas mixing ratio by using the gas feeding mechanism 102 and the evacuation mechanism 103. The thin layer-forming mechanism 105 forms thin layers 104 of a raw material powder within the chamber 101. The electron beam heater 306 performs electron beam heating formation on the thin layer 104, thus fusing portions of such layers to be solidified.

In Comparative Example 2, the raw material powder of the thin layer 104 to be solidified is fused by irradiating the thin layer 104 with the electron beam. At this time, the metal raw material heated or melted by irradiation with the electron beam reacts with a reaction gas containing carbon in the chamber 101. The shaped object is thus carbonized.

Comparative Example 2 allows part of the metal to be carbonized and solidified, but does not provide a three-dimensional shaped object as hard as carbonized ceramics such as TiC, AlC, and SiC. It is probably for the following two reasons that the process of Comparative Example 2 does not produce a hard shaped object. First, the irradiation diameter of the electron beam is as small as several tens of micrometers to several hundreds of micrometers during fusing in the sixth embodiment, and irradiation time for fusing is as short as several tens of milliseconds for each spot. Such local and short-time irradiation is not practical for sufficiently carbonizing metal particles.

Second, the chamber 101 is required to be kept at a high vacuum level to secure an average free path length of the electron beam. Accordingly, an environment containing a high concentration of gas molecules for carbonization cannot be created in the chamber 101. For example, the distance at which the electron beam can scan a two-dimensional area of several centimeters on the surface of the deposition substrate 112 is at least several tens of centimeters. The degree of vacuum at which the electron beam can travel a distance of several tens of centimeters is 1.0 × 10⁻⁵ Pa to 1.0 × 10⁻² Pa. In such a thin gas atmosphere, the nitrogen concentration is insufficient to carbonize the thin layer of the raw material powder. Consequently, the carbon content in the resulting three-dimensional shaped object is at most about 3% (in terms of number of atoms). The carbonized metal material produced in an atmosphere with such a low carbon concentration exhibits a hardness higher than metal, but much lower than carbonized ceramics.

The fourth embodiment allows plasma carbonization at least for several minutes in an atmosphere containing a high concentration of carbon at a pressure of about 0.1 atmosphere and thus eliminates the technical disadvantages of Comparative Example 2, consequently providing a hard shaped object 301.

### Other Embodiments

The methods for producing a carbonized powder and manufacturing a shaped object and the apparatuses for producing the carbonized powder and manufacturing the shaped object of the present disclosure are not limited to those including the components or members disclosed in the fourth to sixth embodiments or those performed under the numerical conditions and the control in the disclosed embodiments. Another embodiment may be realized by replacing one or more or all of the components or members of any of the fourth to sixth embodiments with an equivalent member or equivalent members.

The voltages and pressures used in Examples 4, 5, and 6 can be adjusted according to parameters, such as the size of the shaping container 107, the size of the raw material powder, and the thickness of the thin layers 104. For example, although only an alternating voltage is applied to the thin layer 104 in Examples 4, 5, and 6, a negative direct-current voltage may be superimposed on the alternating voltage to increase the collision speed of positive ions, thereby enhancing the performance of heating the thin layer 104. The substance for feeding carbon atoms to the atmosphere in the chamber 101 may be another hydrocarbon gas other than methane, a gaseous organic compound, carbon monoxide, or carbon dioxide.

In the fourth embodiment, while plasma is generated by applying a voltage to a thin layer 104, a mixture of hydrogen gas and carbon dioxide gas is continuously fed in a constant proportion. In the early stage of plasma generation, however, only hydrogen gas or hydrogen gas and an inert gas such as argon gas may be fed for plasma treatment of the raw material powder.

In the fourth embodiment, the layer being plasma-carbonized is heated with the resistor heater 137. This heating during plasma carbonization is however not always performed by using a heater. What is called sputtering heating may be performed by feeding a mixture of a hydrocarbon gas, hydrogen gas, and argon gas and increasing the negative bias voltage superimposed on the alternating voltage applied to the thin layers 104.

The fifth embodiment illustrates a carbonized powder producing apparatus of what is called a batch process, in which the chamber 101 is returned to atmospheric pressure every time the shaping section 109 is filled with the carbonized thin layers 104'. However, in another embodiment, the carbonized powder producing apparatus may have an in-line configuration in which a processing section for plasma carbonization is connected to a depressurizing section and a vent section. The raw material powder in the air is placed in the depressurizing section, and the depressurizing section is evacuated. Then, the raw material powder is transferred to the processing section. The raw material powder thus carbonized is transferred to the vent section from the processing section and blocked from the processing section. After introducing the air into the processing section, the carbonized raw material powder is removed to the air.

The fifth embodiment also illustrates a shaped object manufacturing apparatus in which a single shaping container 107 is disposed in a single chamber 101. The shaped object manufacturing apparatus however may have a plurality of shaping containers 107 for plasma carbonization and a single shaping container 107 for laser beam heating formation in the single chamber 101.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. A method for producing a powder, comprising:
forming a layer (104) of a raw material powder; and
performing one of an operation of: nitriding the raw material powder of the layer in an atmosphere containing nitrogen, and an operation of carbonizing the raw material powder of the layer in an atmosphere containing carbon.

2. The method according to Claim 1, wherein the layer is formed in a chamber (101) capable of being depressurized, and the one of the operations is performed in an atmosphere having a pressure lower than atmospheric pressure created in the chamber.

3. The method according to Claim 2, wherein the atmosphere in the chamber has a pressure in the range of 1 Pa to less than 20 kPa.

4. The method according to Claim 2 or 3, further comprising creating the atmosphere in the chamber by evacuating the chamber to a first pressure, and then feeding a substance containing one of nitrogen and carbon to the chamber, wherein the atmosphere has a second pressure of more than the first pressure and less than atmospheric pressure.

5. The method according to any one of Claims 2 to 4, wherein the layer is formed in a powder container (107) disposed in and electrically isolated from the chamber and then subjected to the one of the operations.

6. The method according to Claim 5, wherein the layer is formed on a layer of the raw material formed on the bottom of the powder container through the steps of forming and operating one of the operations.

7. The method according to any one of Claims 1 to 6, wherein the one of the operations is performed in a state in which the layer is heated with at least one of a heater, an energy beam, and an inert gas plasma.

8. The method according to any one of Claims 1 to 7, wherein the raw material powder comprises metal particles produced by water atomization.

9. A method for manufacturing a shaped object, the method comprising:
forming a layer (104) of a raw material powder;
performing one of an operation of: nitriding the raw material powder of the layer in an atmosphere containing nitrogen, and an operation of carbonizing the raw material powder of the layer in an atmosphere containing carbon; and
solidifying the layer subjected to the one of the operations by irradiating the layer with an energy beam.

10. The method according to Claim 9, wherein the solidifying is performed in an atmosphere containing nitrogen and reduced oxygen on the layer subjected to the nitriding while a voltage is applied to the nitrided layer to generate a plasma.

11. The method according to Claim 9, wherein the solidifying is performed in an atmosphere containing carbon and reduced oxygen on the layer subjected to the carbonizing while a voltage is applied to the carbonized layer to generate a plasma.

12. The method according to Claim 10, wherein the atmosphere containing nitrogen contains hydrogen.

13. The method according to Claim 11, wherein the atmosphere containing carbon contains hydrogen.

14. The method according to any one of Claims 9 to 13, wherein the energy beam is a laser beam.

15. The method according to any one of Claims 1 to 14, wherein the one of the operations is performed while or after a coating film over the surface of the raw material powder of the layer is removed.

16. The method according to Claim 15, wherein the coating film is an oxide film and is removed by a reduction reaction in an atmosphere containing hydrogen.

17. The method according to Claim 15, wherein the coating film is removed in an atmosphere containing at least one of hydrogen and an inert element by applying a voltage to the layer to generate a plasma.

18. A powder producing apparatus comprising:
a chamber (101);
a forming device (105) capable of forming a layer (104) of a raw material powder in the chamber;
a feeder (102) capable of feeding a substance containing one of nitrogen and carbon to the chamber; and
a power supply device (108, 113) capable of applying a voltage to the layer formed by the forming device.

19. The powder producing apparatus according to Claim 18, wherein the feeder feeds a substance containing hydrogen to the chamber.

20. The powder producing apparatus according to Claim 18 or 19, further comprising a depressurizing device (103) capable of reducing the pressure in the chamber.

21. The powder producing apparatus according to Claim 20, further comprising a measuring device (208) capable of measuring the pressure in the chamber.

22. The powder producing apparatus according to any one of Claims 18 to 21, further comprising a powder container (107) disposed in the chamber, the powder container being electrically isolated from the chamber.

23. The powder producing apparatus according to Claim 22, wherein the powder container has a surface that comes into contact with the layer, the surface being made of an insulating material.

24. The powder producing apparatus according to any one of Claims 18 to 23, further comprising a heater (137) in the powder container.

25. A shaped object manufacturing apparatus comprising:
a chamber (101);
a forming device (105) capable of forming a layer of a raw material powder in the chamber;
a feeder (102) capable of feeding a substance containing one of nitrogen and carbon to the chamber;
a power supply device (108, 113) capable of applying a voltage to the layer formed by the forming device; and
a beam irradiator (106) capable of irradiating the layer with an energy beam.

26. A shaped object produced in the shaped object manufacturing apparatus as set forth in Claim 25, the shaped object having a texture formed by growing crystals and containing 10% or more of nitrogen in terms of number of atoms.

27. The shaped object according to Claim 26, wherein the inside of the shaped object is uniformly nitrided.
